# EUROPEAN PATENT SPECIFICATION

(11) **EP 4 570 329 B1**
(45) Date of publication and mention of the grant of the patent: **12.08.2026**
(21) Application number: 24219166.6
(22) Date of filing: 11.12.2024
(51) Int. Cl.: A63B 21/00

(54) **ADJUSTABLE SINGLE-SPROCKET SYSTEM FOR A BICYCLE TRAINER**
EINSTELLBARES EINZELKORBSYSTEM FÜR EINEN FAHRRADTRAINER
SYSTÈME DE VA-ET-VIENT RÉGLABLE POUR BICYCLETTE D'ENTRAÎNEMENT

(30) Priority: 11.12.2023 US 202363608698 P
(43) Date of publication of application: 18.06.2025
(73) Proprietor: Zwift, Inc., Long Beach, CA 90082 (US)
(72) Inventor: Heath, Jonathan, London (GB); Inge, Doug, London (GB)
(74) Representative: Horler, Philip John

(56) References cited:
- CN-A- 106 414 228
- US-A1- 2011 287 902
- US-A1- 2023 213 087

## Description

### NOTICE OF COPYRIGHTS AND TRADE DRESS

A portion of the disclosure of this patent document contains material which is subject to copyright protection. This patent document may show and/or describe matter which is or may become trade dress of the owner. The copyright and trade dress owner has no objection to the facsimile reproduction by anyone of the patent disclosure as it appears in the Patent and Trademark Office patent files or records, but otherwise reserves all copyright and trade dress rights whatsoever.

### RELATED APPLICATION INFORMATION

This patent claims priority from United States provisional application number 63/608,698 filed December 11, 2023 and entitled "ADJUSTABLE SINGLE-SPROCKET SYSTEM FOR A BICYCLE TRAINER" the entirety of which is incorporated herein as Annex 1, along with Appendix A, at the end of the detailed description and before the claims of the present application.

### BACKGROUND

### Field

This disclosure relates to stationary exercise devices and, more particularly, to an adjustable single-sprocket system for stationary exercise devices.

US-A1-2011/287902 suggests a bike trainer operable by a user for stationary riding when a conventional bicycle is coupled thereto. The bike trainer may be used by removing the rear wheel of the bicycle and selectively coupling the rear dropouts of the bicycle to an axle of the bike trainer. The bike trainer is operative to simulate the "feel" of riding a moving bicycle by providing resistance and inertia similar to that of a bicycle when used normally.

### Description of the Related Art

There exist various types of exercise devices, many of which provide resistance to increase the intensity of the exercise. For example, dedicated indoor cycles and road cycles fixed to training devices (so-called "trainers") enable a user to control or implement systems whereby resistance is added to the pedals by any number of methods to train the user to achieve an increase in endurance, power, and speed.

Some systems rely upon manual addition of resistance through gearing, the application of a fixed brake, or even wind-based resistance (e.g., blower-style flywheels on wheels of old-style exercise cycles). More complex systems began enabling computer control of electronic resistance devices in the 1980s and 1990s. These systems typically enabled users to ride through pre-programmed courses of simulated hills and flats and valleys with the associated increases and decreases in resistance controlled by a computer controller. Or, these systems acted as virtual "spinning" classes where an instructor (computer or real) can control the resistance and vary it with time to pursue the class. Modernly, users can virtually experience these changes in terrain via a display that appears to show the user navigating through a particular course or video spinning class, streamed or previously recorded.

These electronic controlled resistance devices are often magnetic combined with a small or sometimes large flywheel. The most realistic feeling trainers and bicycles typically utilize large flywheels to simulate the mass of the rider and bike. Even more modern resistance devices rely almost exclusively on carefully controlled electromagnets. They do spin, so in some sense they can act as flywheels, but virtually all of the added resistance and momentum is simulated by software through electromagnetic application of current on electromagnets joined to the spinning axle.

A bicycle trainer is a piece of equipment that enables a user to ride a bicycle while the bicycle remains stationary, for example, inside when riding conditions outside are not favorable. Direct drive smart bicycle trainers require a user to remove the rear wheel of the bicycle and place the bicycle on the trainer. A direct drive trainer includes a frame, a device to hold the bicycle securely, and a mechanism that provides resistance when the pedals are turned, such as a flywheel. The direct drive trainer acts as a replacement for the rear wheel, and is used with a matching cassette, so that the user can shift gears during the simulated ride. This creates a problem for both beginners and expert riders. Beginners struggle to understand what cassette type is needed, how to install the cassette on the bicycle trainer, which can be a time-consuming process, and how to fix the trainer to the back wheel of the cycle. Experts are more likely to use multiple bicycles, and therefore may have to settle on only one bike (or cassette) that works with the trainer, or constantly change the cassette. Further, households having more than one user, each of whom has their own bicycle, will also encounter the problem of having to either frequently install different cassettes to match each user's bicycle or settle on using just one bicycle that may not be the preferred bicycle of some of the users.

In addition, the act of engaging the derailleur to push the chain to a different sprocket (or cog) in the cassette to change gears as a rider rides a bicycle trainer and associated bicycle can be a noisy experience indoors. It also creates unnecessary wear and tear of the bicycle parts in furtherance of a virtual ride, especially where it is not necessary for gears to change to simulate changes in resistance. Further, enthusiastic cyclists will often use their lower end bicycles indoors to avoid switching bicycles to ride indoors and avoid unnecessary wear on higher-end or better bicycles. But, those same cyclists would prefer to experience training indoors and out on their higher-end bicycles.

### DESCRIPTION OF THE DRAWINGS

FIG. 1 is a side, perspective overview of an adjustable single-sprocket system for a bicycle trainer.
FIG. 2 is a side, elevation view of an adjustable single-sprocket system for a bicycle trainer in a first position.
FIG. 3 is a is a side, elevation view of an adjustable single-sprocket system for a bicycle trainer in a second position.
FIG. 4 is an exploded view of an adjustable single-sprocket system for a bicycle trainer.
FIG. 5 is an interior, back, perspective view of an adjustment dial for an adjustable single-sprocket system for a bicycle trainer.
FIG. 6 is an interior, front, perspective view of an adjustment dial for an adjustable single-sprocket system for a bicycle trainer.
FIG. 7 is an interior, back, perspective view of a camming spacer for an adjustable single-sprocket system for a bicycle trainer.
FIG. 8 is a side view demonstrating operation of the camming spacer in engagement with the adjustment dial, shown linearly, rather than circularly.
FIG. 9 is a front, perspective view of the outer spacer, the four compression springs, and the outer cover for an adjustable single-sprocket system for a bicycle trainer.
FIG. 10 cross-sectional view of the adjustable single-sprocket system for a bicycle trainer in a first position.
FIG. 11 cross-sectional view of the adjustable single-sprocket system for a bicycle trainer in a second position.

Throughout this description, elements appearing in figures are assigned three-digit reference designators, where the most significant digit is the figure number and the two least significant digits are specific to the element. An element that is not described in conjunction with a figure may be presumed to have the same characteristics and function as a previously-described element having a reference designator with the same least significant digits.

### DETAILED DESCRIPTION

A single-speed sprocket system for virtual shifting, as discussed herein, is compatible with most direct drive trainers, and avoids the problems described above. A user can install a bicycle in a bicycle trainer with a single-speed sprocket system by sliding on the unit and tightening a single bolt with an Allen (or hex) key. As discussed herein, a locking key may be employed to lock a single-speed sprocket system in place without the need for tools. Other quick-attachment mechanisms may also be employed in other cases. No special tools are required for installation, and the user does not need to navigate cassettes, chains, derailers, chain guides, or tensioners. In such a system, the sensation of shifting gears may be provided entirely through an electronic adjustment in the resistance of the flywheel. The single-speed sprocket includes a gully and guide design that keeps the chain aligned and prevents the chain from skipping out of position should a user engage the bicycle's physical shifters and, thus, the derailleur. All shifting takes place virtually with the chain always remaining on the single sprocket which reduces noise, is compatible with all bicycles, and provides for an optimal digital shifting experience.

U.S. patent application number 18/084,809 filed December 20, 2022 by the assignee of the present application discloses one such single sprocket system. One of the primary benefits of a single sprocket is ease of use from the perspective of a consumer. Traditionally, the cassette of gears necessary to mount a bicycle to a trainer or even to an ordinary bicycle incorporates the derailleur, operable via handlebar controls, to move between the various gears.

The single sprocket system can introduce a situation in which the single gear of the single sprocket system is not-quite-aligned with one or more of the derailleur positions that correspond to a user's road bike that is presently being used with the trainer. So, for example, a user may have a road bike - including a cassette with 5, 7, 8, 10, or 12 gears - that is carefully tuned to operate in conjunction with a derailleur to move the chain up and down the cassette as desired by a rider. As is typical, lower gears provide more power, higher gears provide more torque for uphill sections.

When that same bicycle is placed upon a trainer with the single sprocket cassette, a user typically must select one of those derailleur positions to "line up" with that single sprocket. Doing so is quite simple. The user must move through the gear selection until such time as a desired gear is reached. In the best position, the chain will simply directly engage with the single sprocket, perpendicular to the axle of the trainer.

In practice, the fine tuning of the derailleur to work with the ordinary cassette gears used with a road bicycle may not align well with the single sprocket gear. As such, the chain alignment may be slightly off to the left or to the right, resulting in a not-quite-perpendicular engagement with the chain. This usually results in functionality, meaning that the chain will still engage with the sprocket and will turn the trainer as expected.

However, the slightly-off alignment may introduce undesirable tension in the chain, may cause the chain to wear against one or both sides of the single sprocket retention channel, and may generate undesirable noise in doing so. So, for example, a rhythmic, rapid "click, click, click" may continue for the entirety of a person engaging with the trainer as the pedals are in motion. The rubbing may cause the side-links of the chain to wear out much earlier than a smooth, unhindered motion might and may cause the chain and guide channels and even the sprocket to heat unnecessarily which risks bending or melting or otherwise damaging any or all of those components.

The typical response has been to alter the fine tuning on the derailleur to adjust at least one of the gear positions to be slightly to the left or slightly to the right (relative to the sprocket) such that at least one gear position for the chain selected by the gear selector and implemented by the derailleur precisely matches the position of the single sprocket. In practice, this introduces a number of problems.

First, many riders operate their road bikes on a trainer like this only some of the time. So, if that rider alters the shift positions of the derailleur for on-trainer use, then those positions are now non-functional for on-bike use. The rider must then re-adjust each time the bike is put on or removed from the trainer. This adds user friction, and makes the process more cumbersome and less user-friendly. Also, in some cases it may be months between a rider putting a bike on a trainer, then removing it to ride outside (e.g. putting it on in winter months, taking it off in spring and summer months). In such a case, the rider may not remember the adjustments made and may not be able to "undo" them. This may result in more service calls on the bike or in general a less-positive user experience with the on-trainer activities.

Second, many riders, particularly novice riders, are simply not sufficiently sophisticated to understand how to adjust their derailleurs. They may simply not be able or feel overwhelmed in attempting to do so. In such a case, the added complication to ease-of-use for those riders may result in the rider not adjusting their derailleur and using the single sprocket with a poorly aligned chain, causing the chain to wear more quickly. It may also result in non-use of the trainer at all, less cycling on the road, or both. It would be preferrable to make the on-to-off process and its reverse as frictionless as possible for a rider to ensure adoption of both, encourage exercise both inside and outside, and to enable a quick transition between the two as desired by every rider, but particularly novice riders.

Finally, it causes the two systems - road and on-trainer - to be complex and unwieldy, discouraging use of one or both by all riders or prospective riders. If the process is plug and play, then more users will seek it out. If the process requires awkward changes each time a rider engages with the other system, then the rider is likely to forego one or both systems.

It would be preferrable if there were an easily-adjustable option that did not require alteration of the precise derailleur settings of a road bike when that road bike is placed upon a trainer, and that could provide all of the benefits of a single sprocket system including ease of use, ease of attachment, easy on-and-off functionality, cost savings for not purchasing an entire cassette of gears, reduction of wearing of the chain and of the noise indicative of the chain's wearing and rubbing, and simplification for novice and professional users across the board.

The gears of an ordinary cassette are typically five millimeters apart from one another. So, the levels of adjustment necessary are very small. And, even small adjustments can result in a perfectly aligned sprocket from one that was only a tiny amount off to the left or right (relative to the axle of the trainer and axis of the sprocket). A single sprocket system incorporating a micro adjustment is disclosed herein.

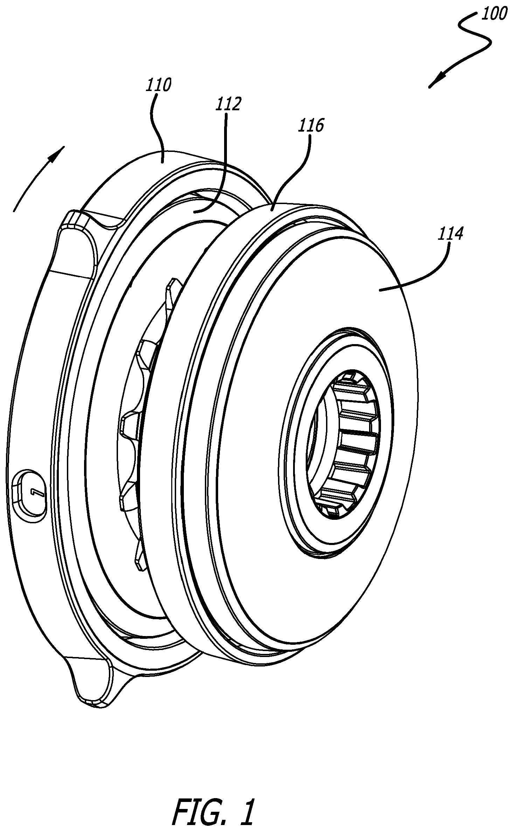

FIG. 1 shows a side, perspective overview of an adjustable single-sprocket system 100 for a bicycle trainer. The system incorporates three major components (with other components shown and discussed below). There is a position adjustment dial 110, which when installed on a bicycle trainer, sits closest to the center of the freehub, that serves to act as a positioner of the single sprocket. As the adjustment dial 110 is rotated forward (clockwise in the image as shown) relative to the freehub, a series of ratcheted positions are passed through. A window showing the adjustment position is shown (presently showing "1") to clearly indicate to a user the position of the adjustment dial. In such a way, a user may quickly and easily see the position as a bike is mounted to the trainer and single sprocket and may immediately adjust it to the adjustment position that the user remembers is the correct one. Because the adjustment dial is ratcheted (discussed below) and spring-loaded it may also maintain its position between installations of the bike and associated chain to the trainer.

The second component is the camming spacer 112 on which a sprocket 111 itself is mounted. The camming spacer 112 floats, pinned between the position adjustment dial 110, adjacent to the sprocket 111, and the outside cover 114. The camming spacer 112 is held inwards (toward the adjustment dial 110) by a series of compression springs (discussed below) which force an outer spacer 114 inward, applying pressure to the sprocket 111 and the camming spacer 112 toward the position adjustment dial 110. In this way, the sprocket 111 itself may be micro-adjusted by small increments, altered by turning the adjustment dial 110.

The position alteration provided by the adjustment dial 110 is preferably in increments of less than one millimeter each from side-to-side. The total available adjustment across all positions may be approximately 6 millimeters. This enables the system of micro-adjustments to bridge the gap between typical gear shifts (five millimeters) in most derailleur systems with a gear changer. If the derailleur is off by more than six millimeters, the user typically should begin the adjustment from another chosen gear entirely (e.g. up one gear or down one gear) to get the baseline closer to centered within the single sprocket system.

The third component is the outer spacer 114, the rightmost component, which serves as a backstop against which the compression of the springs (discussed below) operates to counteract movement of the sprocket 111 outward while in operation or while the position of the camming spacer 112 is pushing the sprocket 111 outward, away from the adjustment dial 110.

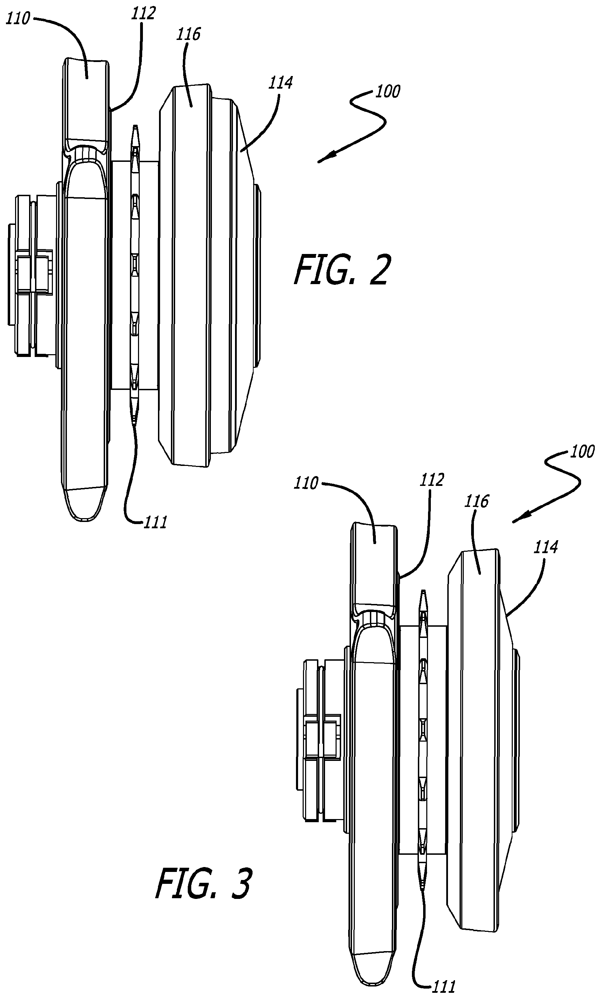

Turning to FIG. 2 a side, elevation view of an adjustable single-sprocket system 100 for a bicycle trainer in a first position is shown. Here, the spacing of the position adjustment dial 110, camming spacer 112, and outer spacer 114 can be seen in a position which orients the sprocket 111 fully to the left. In this position of adjustment, the sprocket 111 will be closest to the freehub of the bicycle trainer.

FIG. 3 is a side, elevation view of an adjustable single-sprocket system 100 for a bicycle trainer in a second position. In this second position, the sprocket 111 has been moved as fully as possible to the right, away from the freehub of the bicycle trainer. The same position adjustment dial 110 has been rotated to cause the sprocket 111 to move. The camming spacer 112 has compressed closer to the outer spacer 114.

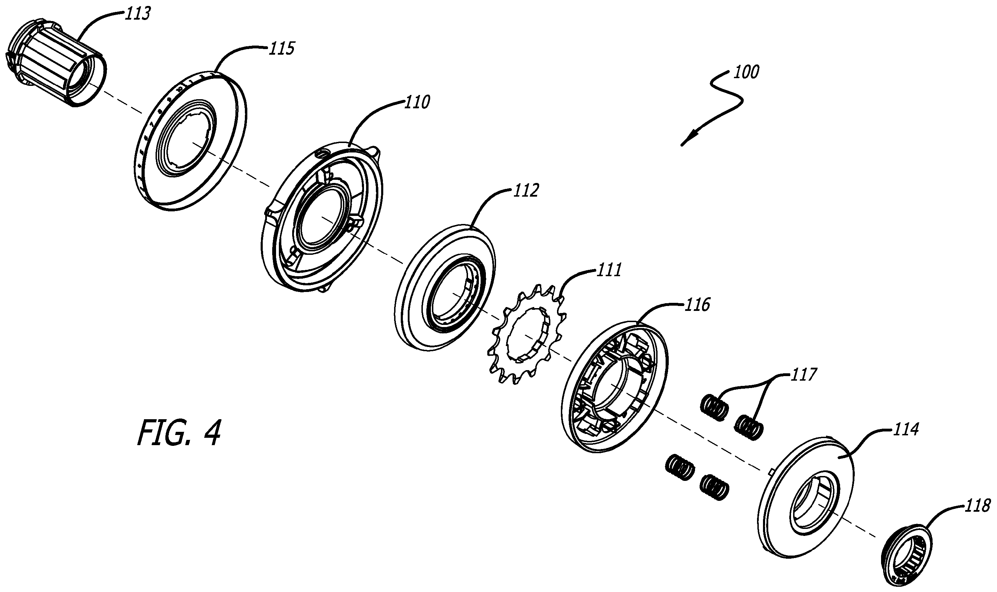

Turning now to FIG. 4, an exploded view of an adjustable single-sprocket system 100 for a bicycle trainer is shown. Here, the entire system 100 may be seen. In order from left to right, the components are the freehub 113 (typically provided as part of, or as an accessory to, the trainer), indicator disc 115 (for showing the position of the adjustment dial), the adjustment dial 110, the camming spacer 112, the sprocket 111, the outer spacer 116, the four compression springs 117, the outer cover 114, and the freehub lock 118.

The freehub 113 is fixed to the trainer and/or bicycle (e.g. the system 100 may be used on any freehub, including a bicycle or a trainer or an indoor cycle). The freehub is typically the element that engages a sprocket having multiple gears. Here, there is a sprocket 111 with a single gear.

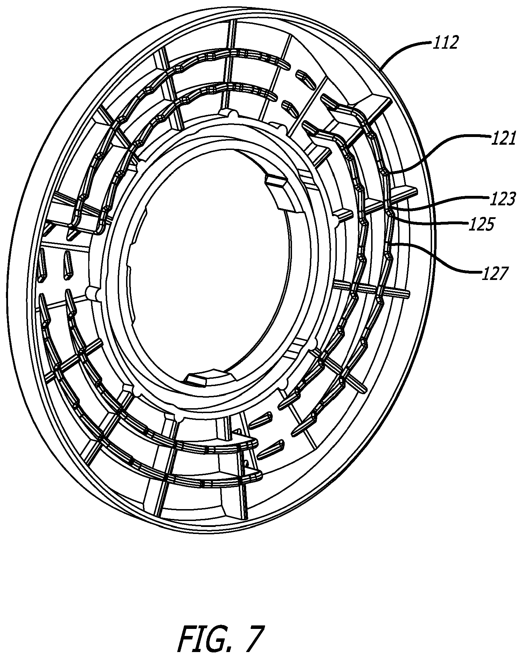

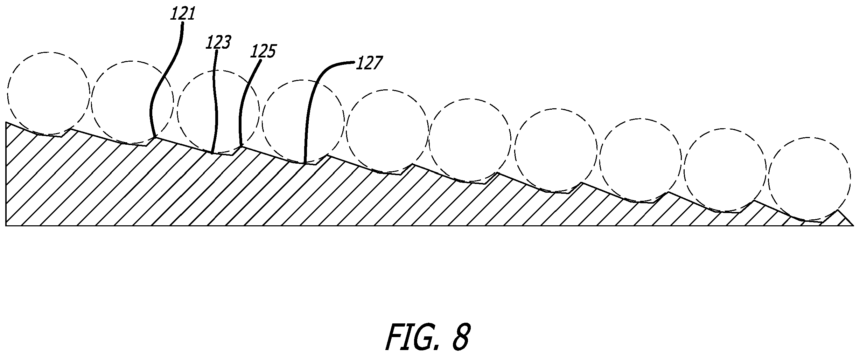

The indicator disc 115 serves to provide visual indication of the present micro adjustment in numerical form. It moves in increments corresponding to the movement of the pips (discussed below) upward in the ramp faces and ridges (see FIGs. 7 & 8) from 1 to 10. As indicated above, each increment is approximately 6/10ths of a millimeter in horizontal adjustment to provide for the six millimeter adjustment over ten increments. In other cases, more or fewer increments and corresponding ramp faces and ridges may be used.

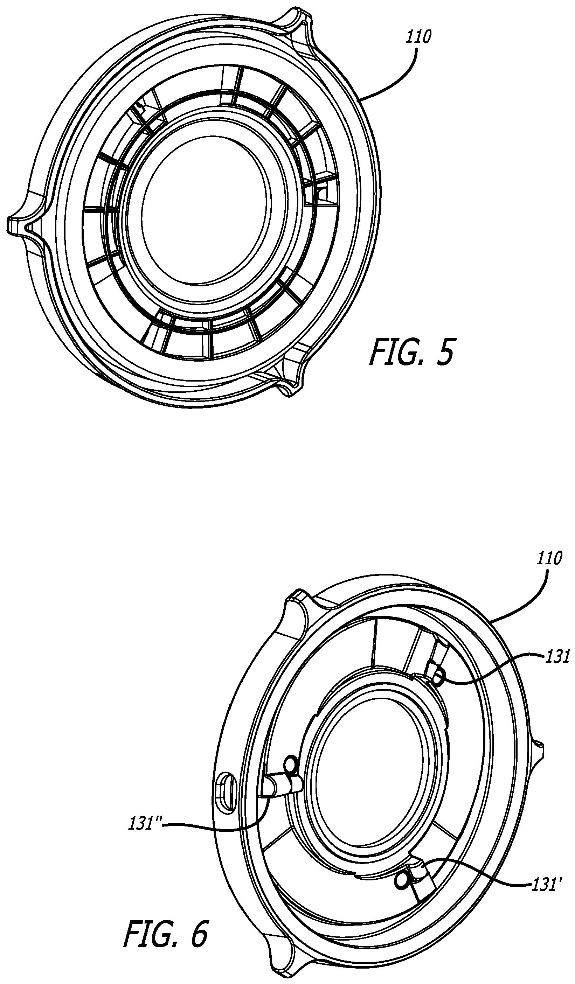

The adjustment dial 110 includes a plurality of pips (see FIG. 6) and a series of handles on the exterior to enable a user to rotate the adjustment dial 110 about the same axis as the freehub 113 to adjust the micro adjustments left or right in 6/10ths of a millimeter increments. This is discussed more fully below with reference to FIG. 6.

The camming spacer 112 operates in conjunction with the adjustment dial 110 and its pips to move those pips over ramp faces and down into ramp ridges (see FIGs. 7 & 8) as the adjustment dial is moved "up" or "down." The camming spacer 112 includes a circular set of ramps, corresponding to the counterpart pips on the adjustment dial 110 through which the pips move, effectively held in "grooves" on those ramps and in those ramp ridges will sit through frictional engagement with the ramp and as pressed by the compression springs 117 (see below).

The sprocket 111 is a single gear sprocket for use with a bicycle, trainer, or indoor cycle. The sprocket 111 takes the place of a full cassette of many gears that is more-typical in most bicycling applications. The single gear is used in conjunction with software to simulate gearing of outdoor cycles when used with a bicycle trainer and suitable software. The sprocket 111 is held in place by the compression of the compression springs 117 and the overall system.

The outer spacer 116 presses against the sprocket 111 and includes a shape, similar to that of the camming spacer 112 to encourage a bicycle chain to remain engaged with the sprocket 111 and within the groove for the chain and sprocket 111.

The compression springs 117 press against the outer cover 114 which is held in place by the freehub lock 118 to provide compression against the camming action of the camming spacer 112 and adjustment dial 110.

The outer cover 114 is a backstop against movement of the entire system 100 outward away from the freehub 113 as held in place by the freehub lock 118.

The freehub lock 118 is a typical freehub lock that engages with a freehub to keep the overall system 100 locked in place so that the camming action of the camming spacer 112 and the adjustment dial 110 can operate to provide small adjustments to the position of the sprocket 111.

The adjustment dial 110 and the camming spacer 112 work together to enable the micro-adjustments as the adjustment dial 110 is turned. The interior of both components that interact one with another may be seen in FIGs. 5, 6, and 7. FIG. 5 is an interior, back, perspective view of an adjustment dial 110 for an adjustable single-sprocket system for a bicycle trainer. FIG. 6 is an interior, front, perspective view of an adjustment dial 110 for an adjustable single-sprocket system for a bicycle trainer. FIG. 7 is an interior, back, perspective view of a camming spacer 112 for an adjustable single-sprocket system for a bicycle trainer.

Referring back to FIG. 6, the adjustment dial 100 has three pips 131, 131', 131", evenly spaced around the interior at the peak of a semi-circular adjustment ramp. The pips 131, 131', 131" engage with a plurality of counterpart, interior, ratcheted ramp faces 121, 125 on the camming spacer 112 (FIG. 7). Grease may be added to the ratchet face 121, 125 of the adjustment ramp to enable a smooth transition as the adjustment dial is turned. From a user perspective, and because of the coiled springs shown above providing resistance, each pip 131, 131', 131" (FIGs. 5 & 6) will slip within the ridges 123, 127 and rest there. In this example, the pips 131, 131', 131" have a radius of 3 millimeters or thereabout.

If shown linearly (as opposed to semi-circularly in the device), the ridges along one of the ramps appear similar FIG. 8. FIG. 8 is a side view demonstrating operation of the camming spacer in engagement with the adjustment dial, shown linearly, rather than circularly.

So, as a user moves the adjustment dial 110, a minimal resistance will apply as the pips 131, 131', 131" (FIG.s 5 & 6) on the adjustment ramp are moved up over the camming ramp (e.g. over the ratcheted ramp faces 121, 125) to sit in the next ridge (e.g. ridges 123, 127 in FIGs. 7 & 8) groove. Then, the pip will rest in that ridge groove (e.g. ridges 123, 127 in FIGs. 7 & 8)) unless and until the user adjusts the adjustment dial 110 still more. The tension provided by the coil springs (discussed below) will retain each pip 131, 131', 131" within the ridge groove (e.g. ridges 123, 127 in FIGs. 7 & 8) during operation. And, the chain itself, which desires to move as freely as possible is not expected to pull the sprocket materially in either direction along the sprocket's axis when in operation when the chain is relatively well aligned with the sprocket. Throughout this disclosure, the term "sproket's axis" is used interchangeably with terms such as "rotation axis about the sprocket" and "rotation axis". All of these terms are intended to mean the axis about which the sprocket rotates.

Through experimentation, the inventors have determined that, for a six-millimeter range and a device of the contemplated size, three pips 131, 131', 131" and corresponding internal semicircular ratcheted ramp faces 121, 125 are provide a good compromise compared to other numbers. Only one or two pips and ratcheted ramp faces result in a rocking sprocket that is deemed too unstable. While the use of four or five or more pips may provide a satisfactory system in some cases, the inventors found that for a six-millimeter adjustment range and the contemplated size, the ramp angle was too high when using four or more pips. It may also introduce more manufacturing cost and adds more possibility for machining and manufacturing errors that result in inconsistent positioning of the sprocket relative to the freehub. Much as the most stable base for a table is three legs or three points of contact (always forming a plane), the pips and ratcheted ramp faces preferably are at least three, and in some cases exactly three, though other numbers of each are possible.

With three pips 131, 131', 131" along the adjustment ramp and ratcheted ramp faces regularly or periodically distributed along circular shapes of matching diameter, each adjustment ramp represents a 120-degree rotation. More generally, for n pips along the adjustment ramp, each camming ramp would then represent a 360/n degree rotation. It will be appreciated that with different dimensions, a different number of ramp faces (and corresponding pips) may be found more desirable. In this example, the diameters of the circular shape that the ramp follow is about 60 millimeters and having three ramps and pips has been found to work well. In other examples, for example with a greater diameter for the ramps, four ramps may be found to be more desirable. In other words, a suitable number of ridge ramp faces on the camming spacer (and matching number of pips on the adjustment dial) may depend on the diameter of the ramps, on the desired ratchet-profile of the camming ramp (to provide the desired resistance or ease of changing the index position), on the pip's dimension, on other configuration(s) of the system, or on any combination thereof.

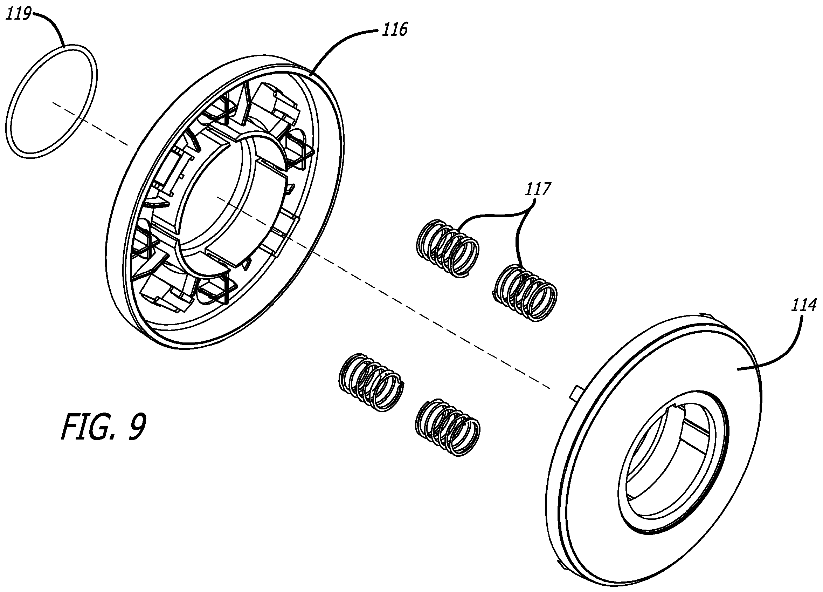

FIG. 9 is a front, perspective view of the outer spacer 116, the four compression springs 117, and the outer cover 114 for an adjustable single-sprocket system for a bicycle trainer. Here, four compression springs 117 have been found to uniformly apply pressure to the outer spacer 114 which enables the entire system 100 (FIG. 3) to be maintained in a desired adjustment position. Because the compression springs 117 innately incorporate pressure parallel to the sprocket's axis and freehub, and innately adjust to fill the space (e.g. provide the tension) by their nature as coil springs, the likelihood of non-uniform compression is low. And, the use of the four compression springs 117 (or more in other cases) has generally been seen to be the most cost-effective and provide uniform compression with the fewest possible components. In general, fewer components means less complications and less likelihood of manufacturing or machining errors.

Referring again to FIGs. 5, 6, and 7, in operation, as the adjustment dial 110 is turned "up" (clockwise in the figures), the pip 131. on the adjustment dial 110 moves up one ridge 123, 127 on the camming spacer 112. The camming spacer 112 is held in a fixed rotational position by its interior (direct or indirect) engagement with the freehub. As the three pips 131. 131', 131" move clockwise, they each move "up" the corresponding ratcheted ramp face 121,125 on the interior of the camming spacer 112 into the next ratcheted ramp face 121, 125. This inherently pushes the camming spacer 112 away from the freehub center slightly, typically by just less than one millimeter in each ridge 123, 127. As the adjustment dial 110 is moved "up" over and over, the sprocket 111 (FIG. 3) (by operation of movement of the camming spacer 112) is moved less than one millimeter away from the center of the freehub 113 (FIG. 3). In some examples, if the pips are in the upmost position of the ramps and the adjustment is turned "up" again, the pips will move across the last ridge of the ramp and reach the lowermost position of the (next) ramp. In some cases, for example where the pips 131, 131', 131" can move up and down along the ridges 123, 127, a stop may provided (e.g., molded) into the "end" of the ramp to stop the pip from passing the maximum adjustment position.

The outer spacer 116 is held in place, adding compression toward the interior of the freehub by the entire assembly of the four compression springs 117 and outer cover 114, shown in FIG. 9. An O-ring 119 may be used to provide some spacing between the outer spacer 116 and the sprocket 111 (FIG. 3), for example depending on the trainer model and/or on the bicycle (or equivalent) device used with the trainer and single sprocket device. The outer spacer 116 may also incorporate a lip on its interior to provide a channel, between the outer spacer 116 and the camming spacer, where the sprocket 111 (FIG. 3) may sit and of sufficient width to accept the chain.

The channel formed between the camming spacer 112 and the outer spacer 116 may be designed in such a way to encourage the chain to remain within the channel, even should a user unintentionally or intentionally operate the derailleur to try and "change" gears of the chain joined to the single sprocket 111 (FIG. 3).

The outer cover 116 may be held in place on the freehub by a hub lock (not shown) which serves to provide the basis for the compression added by the spring tension on the interiors of the outer cover 114 and the outer spacer 116.

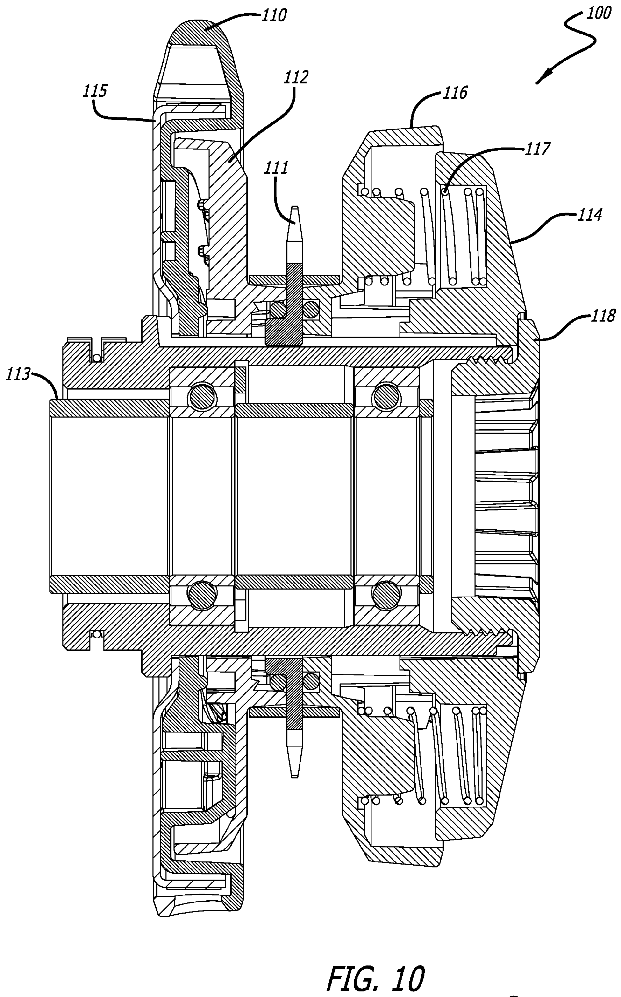

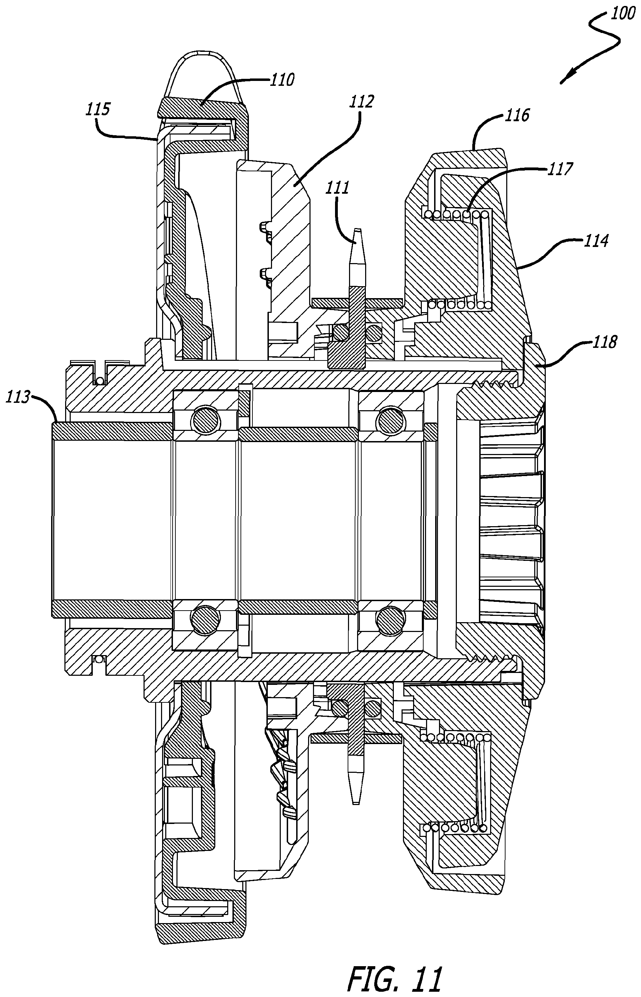

Cross-sectional images of the entire assembly at a "zero position" (a first position) and a "max position" (a second position) are shown below with reference to FIGs. 10 and 11. FIG. 10 cross-sectional view of the adjustable single-sprocket system for a bicycle trainer in the first position. FIG. 11 cross-sectional view of the adjustable single-sprocket system for a bicycle trainer in the second position.

In these images, the movement of the camming spacer 112 and the outer spacer 116 (forcing the movement of the sprocket 111 between them) and the compression of the springs 117 from not-compressed to very compressed may be seen more-clearly. The channel in which the sprocket 111 sits, to encourage the chain to remain within the channel and on the sprocket 111, even in the event of a derailleur operating to try and "change gears" while the sprocket 111 is engaged may also be seen.

Appendix A, including more images and description of the design, is being filed along with this application and is incorporated in its entirety.

The skilled person will appreciate that the features and principles discussed herein are not limited to the illustrative embodiments.

For example, while the described system provides for a clockwise rotation for moving the pips up along the ramps, the same principles can be implemented in an anti-clockwise rotation device to move the pip up along the ramps.

The camming spacer 112 held inwards toward the adjustment dial by springs 117 may in other examples be held outwards and/or be held by other types of compression devices, such as a piston system, other types of springs, etc. The number of compression devices provided may also vary. Typically, for localized compression means, like springs or pistons, having at least three compression devices can help keep the compression force well distributed. More than three or four compression means may also be used to further improve the distribution of the compression forces - although this would also increase the complexity and costs of the system.

Likewise, the adjustment dial 110 may be implemented differently, and may for example not include the same window and position index combination. It may for example include a marking system on a first part and a corresponding marking system on a second part which rotates relative to the first part when adjusting the position of the single sprocket. The markings can for example include a position marker on the first part and a position indicator on the second part, such as a number, letter or other graphical representation of the current position of the sprocket along the axis. In another alternative, no marking or indication may be provided on the system. While this may be less convenient for riders, it can also reduce manufacturing costs by simplifying the design and manufacturing process for the system. Riders can also still determine a suitable sprocket position using a visual inspection or listening to any rubbing of the chain and may then keep the sprocket in this position. In other words, the system would still provide benefits discussed to the riders in relation to a better alignment of the chain and sprocket.

Some examples include a 6-millimeter range for adjusting the position of the single sprocket. While a range of about 6 millimeters is expected to address misalignment issues in most cases, it will be appreciated that the range may be greater or smaller. A greater range can help align the chain and sprocket 111 with minimal changes to the derailleur's settings. A smaller range may reduce the likelihood of reaching the desired alignment between chain and sprocket but is still expected to improve the alignment over a non-adjustable sprocket, and may reduce the costs of the system by simplifying the design.

In some examples, silicon grease is provided on the ratchet face to facilitate a smooth adjustment of the position while in other cases a different - or no - lubricant is used.

Although with the ramp design provided above, the ridges of the ramp are provided so that the pips can only move in one direction (up the ramp) upon actuation of the adjustment dial, in some cases, the ramps may be designed so that the pips can only move down or can move in either direction upon actuation of the adjustment dial.

While a three-pip system has been described, the skilled person will appreciate that for a smaller adjustment range and/or for a larger device, the number of ramps and pips may be four or more.

The pips' dimensions may also be varied. A smaller diameter may for example allow a finer ratchet tooth pitch but would also decrease the contact patch and thus result in a higher wear rate. A larger diameter would conversely result in a higher contact patch and a lower wear rate and would also result in a coarser ratchet tooth pitch. In some examples, the pips have a radius comprised between 2 and 4 millimeters. Also, the pips in the examples above are generally semi-spherical in shape and in other example they may have a different shape, such as an ellipsoidal shape, an elongated shape, and/or a curved shape following the curve of the semi-circular shape of the ramps.

It will also be appreciated that semicircular is intended in the broad sense of the word. The term is not intended to be limited to semi- or half- circle shapes and instead includes any partial arc of a circle which may be more or less than a half-circle.

In some cases, the device may be designed to have, when in use and relative to the sprocket, the adjustment dial (with the ramps) and the camming spacer (with the pips or equivalent) on an inner side of the sprocket along the sprocket's axis, nearer the trainer or exercising device when in sue. In other cases, the adjustment dial and the camming spacer may be on an outer side of the sprocket along the sprocket's axis, further away from the trainer when in use. In other words, the parts that are described as "inner" or "outer" above could equally be described as "outer" or "inner", respectively. It is also conceivable that the system or parts of the system could be reversible and may be used in a first orientation with the adjustment dial and camming spacer on an inner side of the sprocket, and also in a second orientation with the adjustment dial and camming spacer being on an outer side.

Likewise, the camming spacer 112 that faces the adjustment dial will in some cases be closer to the sprocket 111 than the adjustment dial 110, along the sprocket's axis (as illustrated in the example above). In other cases, the adjustment dial 110 will be closer to the sprocket than the camming spacer 112 and the same principles regarding the adjustment of the sprocket 111 will apply equally.

In some designs, the adjustment dial 110 may comprise a protrusion (e.g. a pip) which has at least one resting part on either side of the protrusion in a radial direction. For example, in the illustrative example above, the adjustment dial 110 is provided with two ramps which culminate on either side of the pip. In other examples, the resting parts may be provided by a shape other than a ramp, although having an incline on one or both sides (in a circular direction) of the peak of a resting part can help provide a smoother movement of the adjustment dial 110 and smoother operation of the system. The camming spacer 112 may then include corresponding supporting parts, on either side (in a radial direction) of the ratcheted ramp. For the camming spacer 112, the two supporting parts are expected to have a ramp-like profile which matches the ramp-like profile of the ratcheted part as will be understood from the description of how the resting and supporting parts operate.

The resting and supporting parts are dimensioned so that, when the pip or protrusion is in a resting position of the ratcheted ramp of the camming spacer 112, at least one resting part and one supporting part will abut. Accordingly, the resting and supporting part will take some of the load from the compression means and will reduce the load on the protrusion or pip, thereby increasing the durability of the protrusion. If all resting and supporting parts abut when the protrusion is resting in a dip of the ramp (an indexed position of the system), the benefit for the protrusion would be even greater. However, achieving this level of accuracy may come with increased manufacturing costs.

When the adjustment dial 110 is rotated relative to the camming spacer 112, the protrusions of the adjustment dial are moved out or a recess in the ratcheted profile of the camming spacer 112 and will go up the ratcheted ramp. As this happens, the resting and supporting parts will move away from each other, namely, the gap between these parts will increase. While this is happening, the load of the compression means is mostly or fully carried by the protrusions or pips as it moves up the ramp (either to go up to the next position up the ratcheted ramp or to go up the ridge before it can go down to the next position down the ratcheted ramp). Once the pips are back into a recess of the ratcheted profile, at least one resting part of the adjustment dial will contact the corresponding supporting part of the camming spacer. As explained above, the abutting parts will then again help reduce the compression load on the protrusions.

In this example, two resting and supporting parts are being provided for each protrusion on the adjustment dial 110 and for each ramp on the camming spacer 112, respectively, with one on each side in a radial direction. In some cases, only one resting and supporting part may be provided instead, although two parts is expected to provide a more stable arrangement. In other examples, more than two may be provided, with for example three parts for each protrusion and ratcheted ramp, or four parts if a more balanced distribution in a radial direction is desired.

## Claims

1. An adjustable single-sprocket system (100) for stationary exercise devices, the system (100) comprising:
a sprocket (111) having an opening for an axle, the sprocket having teeth about a perimeter of the sprocket (111), wherein the teeth of the sprocket (111) are for engaging a bicycle chain;
an adjustment dial (110), having an opening for the axle, the adjustment dial (110) incorporating at least two adjustment ramps along a dial side closest to the sprocket (111); and
a camming spacer (112), having an opening for the axle and including at least two camming ramps to engage with the at least two adjustment ramps to increase or decrease distance of the sprocket (111) from the adjustment dial (110) along a rotation axis about the sprocket (111) as the adjustment dial is rotated about the rotation axis in a first direction or a second direction.

2. The adjustable single-sprocket system (100) of claim 1 further comprising a tension system, the tension system comprising:
an outer cover (114) for fixedly engaging the axle;
at least one compression device, engaged with an interior of the outer cover (114); and
an outer spacer(116) for engaging with the at least one compression device on a first side and with the sprocket (111) on a second side.

3. The adjustable single-sprocket system of claim 2 wherein the at least one compression device provides tension to force the outer spacer (116) into engagement with the sprocket (111) which in turn engages with the camming spacer (112) to thereby provide tension opposed to movement of the adjustment dial (110).

4. The adjustable single-sprocket system (100) of any preceding claim further comprising a compression system including at least one spring (117) for compressing the sprocket (111), camming spacer (112), and adjustment dial (110) into engagement with one another.

5. The adjustable single-sprocket system (100) of any preceding claim wherein a location where the at least two adjustment ramps of the adjustment dial (110) engage the camming spacer (112) causes the camming spacer (112) to move the sprocket (111) as the adjustment dial (110) is rotated.

6. The adjustable single-sprocket system (100) of claim 5 wherein the at least two camming ramps include a plurality of ridges along the ramps where engagement with the at least two adjustment ramps is held in place by tension against the camming spacer (112).

7. The adjustable single sprocket system (100) of any preceding claim wherein the adjustment dial (110) incorporates a corresponding number of pips to the number of the at least two adjustment ramps on the adjustment dial (110).

8. The adjustable single-sprocket system (100) of claim 7 wherein the pips are formed of material integral to the adjustment dial (110).

9. The adjustable single sprocket system (100) of any preceding claim, further comprising:
a first chain guide adjacent a first planar side of the sprocket (111), wherein the first chain guide is for re-engaging the teeth of the sprocket (111) with the bicycle chain when the bicycle chain has become disengaged from the teeth of the sprocket (111) towards the first planar side; and
a second chain guide adjacent a second planar side of the sprocket (111), wherein the second chain guide is for re-engaging the teeth of the sprocket (111) with the bicycle chain when the bicycle chain has become disengaged from the teeth of the sprocket (111) towards the second planar side.

## Patentansprüche

1. Einstellbares Einzelkettenradsystem (100) für stationäre Trainingsgeräte, das System (100) umfassend:
ein Kettenrad (111), das eine Öffnung für eine Achse aufweist, wobei das Kettenrad Zähne um einen Umfang des Kettenrads (111) aufweist, wobei die Zähne des Kettenrads (111) zum Eingriff mit einer Fahrradkette dienen,
eine Einstellvorrichtung (110), die eine Öffnung für die Achse aufweist, wobei die Einstellvorrichtung (110) mindestens zwei Einstellrampen entlang einer Einstellvorrichtungsseite, die dem Kettenrad (111) am nächsten ist, enthält,
einen Nockenabstandshalter (112), der eine Öffnung für die Achse aufweist und mindestens zwei Nockenrampen enthält, die mit den mindestens zwei Einstellrampen in Eingriff stehen, um den Abstand des Kettenrads (111) von der Einstellvorrichtung (110) entlang einer Drehachse um das Kettenrad (111) zu vergrößern oder zu verkleinern, wenn die Einstellvorrichtung um die Drehachse in eine erste oder zweite Richtung gedreht wird.

2. Einstellbares Einzelkettenradsystem (100) nach Anspruch 1, ferner umfassend ein Spannsystem, das Spannsystem umfassend:
eine Außenabdeckung (114) zum festen Eingriff der Achse,
mindestens eine Kompressionsvorrichtung, die mit dem Inneren der Außenabdeckung (114) in Eingriff steht, und
einen äußeren Abstandhalter (116) zum Eingriff mit der mindestens einen Kompressionsvorrichtung auf einer ersten Seite und mit dem Kettenrad (111) auf einer zweiten Seite.

3. Einstellbares Einzelkettenradsystem nach Anspruch 2, wobei die mindestens eine Kompressionsvorrichtung Spannung bereitstellt, um den äußeren Abstandhalter (116) in Eingriff mit dem Kettenrad (111) zu bringen, welches wiederum mit dem Nockendistanzring (112) in Eingriff steht, um dadurch eine Spannung bereitzustellen, die der Bewegung der Einstellvorrichtung (110) entgegengesetzt ist.

4. Einstellbares Einzelkettenradsystem (100) nach einem der vorhergehenden Ansprüche, ferner umfassend ein Kompressionssystem, das mindestens eine Feder (117) zum Zusammendrücken des Kettenrads (111), des Nockenabstandshalters (112) und der Einstellvorrichtung (110) enthält.

5. Einstellbares Einzelkettenradsystem (100) nach einem der vorhergehenden Ansprüche, wobei eine Stelle, an der die mindestens zwei Einstellrampen der Einstellvorrichtung (110) mit dem Nockenabstandshalter (112) in Eingriff stehen, den Nockenabstandshalter (112) veranlassen, das Kettenrad (111) zu bewegen, wenn die Einstellvorrichtung (110) gedreht wird.

6. Einstellbares Einzelkettenradsystem (100) nach Anspruch 5, wobei die mindestens zwei Nockenrampen eine Vielzahl von Rippen entlang der Rampen enthalten, wobei der Eingriff mit den mindestens zwei Einstellrampen durch Spannung gegen den Nockenabstandshalter (112) aufrechterhalten wird.

7. Einstellbares Einzelkettenradsystem (100) nach einem der vorhergehenden Ansprüche, wobei die Einstellvorrichtung (110) eine entsprechende Anzahl von Höckern aufweist wie die Anzahl der mindestens zwei Einstellrampen auf der Einstellvorrichtung (110).

8. Einstellbares Einzelkettenradsystem (100) nach Anspruch 7, wobei die Höcker aus einem Material ausgebildet sind, das integral mit der Einstellvorrichtung (110) ist.

9. Einstellbares Einzelkettenradsystem (100) nach einem der vorhergehenden Ansprüche, ferner umfassend:
eine erste Kettenführung an einer ersten planaren Seite des Kettenrads (111), wobei die erste Kettenführung dazu dient, die Zähne des Kettenrads (111) wieder mit der Fahrradkette in Eingriff zu bringen, wenn die Fahrradkette zur ersten planaren Seite hin von den Zähnen des Kettenrads (111) gelöst wurde, und
eine zweite Kettenführung an einer zweiten planaren Seite des Kettenrads (111), wobei die zweite Kettenführung dazu dient, die Zähne des Kettenrads (111) wieder mit der Fahrradkette in Eingriff zu bringen, wenn die Fahrradkette zur zweiten planaren Seite hin von den Zähnen des Kettenrads (111) gelöst wurde.

## Revendications

1. Un système à pignon unique réglable (100) pour appareils d'entrainement stationnaires, le système (100) comprenant :
un pignon (111) ayant une ouverture pour un axe, le pignon ayant des dents autour d'un périmètre du pignon (111), dans lequel les dents du pignon (111) sont destinées à se mettre en prise avec une chaîne de bicyclette ;
une molette de réglage (110), ayant une ouverture pour l'axe, la molette de réglage (110) incorporant au moins deux rampes de réglage le long d'un côté de la molette le plus proche du pignon (111) ; et
une entretoise à came (112), ayant une ouverture pour l'axe et comprenant au moins deux rampes à came pour se mettre en prise avec les au moins deux rampes de réglage pour augmenter ou diminuer la distance du pignon (111) par rapport à la molette de réglage (110) le long d'un axe de rotation autour du pignon (111) lorsque la molette de réglage est tournée autour de l'axe de rotation dans un premier sens ou dans un second sens.

2. Le système à pignon unique réglable (100) de la revendication 1 comprenant en outre un système de tension, le système de tension comprenant :
un couvercle extérieur (114) pour se mettre en contact de manière fixe avec l'axe ;
au moins un dispositif de compression, en contact avec un intérieur du couvercle extérieur (114) ; et
une entretoise extérieure (116) pour se mettre en prise avec au moins un dispositif de compression sur un premier côté et avec le pignon (111) sur un second côté.

3. Le système à pignon unique réglable selon la revendication 2, dans lequel le au moins un dispositif de compression fournit une tension pour forcer l'entretoise extérieure (116) à se mettre en prise avec le pignon (111) qui à son tour se met en prise avec l'entretoise à came (112) pour fournir ainsi une tension opposée au mouvement de la molette de réglage (110).

4. Le système à pignon unique réglable (100) selon l'une quelconque des revendications précédentes, comprenant en outre un système de compression comprenant au moins un ressort (117) pour comprimer le pignon (111), l'entretoise de came (112) et la molette de réglage (110) en prise les uns avec les autres.

5. Le système à pignon unique réglable (100) selon l'une quelconque des revendications précédentes, dans lequel un emplacement où les au moins deux rampes de réglage de la molette de réglage (110) se mettant en prise avec l'entretoise de came (112) amène l'entretoise de came (112) à déplacer le pignon (111) lorsque la molette de réglage (110) est tournée.

6. Le système à pignon unique réglable (100) selon la revendication 5, dans lequel les au moins deux rampes de came comprennent une pluralité d'arêtes le long des rampes où l'engagement avec les au moins deux rampes de réglage est maintenu en place par tension contre l'entretoise de came (112).

7. Le système à pignon unique réglable (100) selon l'une quelconque des revendications précédentes, dans lequel la molette de réglage (110) incorpore un nombre de crans correspondant au nombre des au moins deux rampes de réglage sur la molette de réglage (110).

8. Le système à pignon unique réglable (100) selon la revendication 7, dans lequel les crans sont formés d'un matériau monobloc avec la molette de réglage (110).

9. Le système à pignon unique réglable (100) selon l'une quelconque des revendications précédentes, comprenant en outre :
un premier guide-chaîne adjacent à un premier côté plan du pignon (111), dans lequel le premier guide-chaîne sert à mettre en prise de nouveau les dents du pignon (111) avec la chaîne de bicyclette lorsque la chaîne de bicyclette s'est mise hors prise avec les dents du pignon (111) vers le premier côté plan ; et
un deuxième guide de chaîne adjacent à un deuxième côté plan du pignon (111), dans lequel le deuxième guide de chaîne est destiné à se mettre en prise avec les dents du pignon (111) avec la chaîne de bicyclette lorsque
la chaîne de bicyclette s'est mise hors prise avec les dents du pignon (111) vers le second côté plan.
